# FASCICULE DE BREVET EUROPEEN

(11) **EP 2 768 702 B1**
(45) Date de publication et mention de la délivrance du brevet: **10.08.2016**
(21) Numéro de dépôt: 12780238.7
(22) Date de dépôt: 11.10.2012
(51) Int. Cl.: B60R 13/02, B60T 7/06, B60T 17/22, B60T 17/06

(54) **DISPOSITIF DE PROTECTION À PORTION DE BUTÉE DE PIED POUR UNE BARRE DE RENVOI ET DES MOYENS DE CONTRÔLE D'UN SYSTÈME DE FREINAGE DE VÉHICULE**
VORRICHTUNG ZUM SCHUTZ EIN TEIL EINES BAR, DIE MIT FUSS GESTEUERT WIRD, UND VORRICHTUNG FÜR FAHRZEUG BREMSANLAGE STEUERUNG
DEVICE FOR PROTECTING A PORTION OF A BAR WHICH IS CONTROLLED BY FOOT AND MEANS FOR CONTROLLING A VEHICLE BRAKING SYSTEM

(30) Priorité: 20.10.2011 FR 1159523
(43) Date de publication de la demande: 27.08.2014
(73) Titulaire: Peugeot Citroën Automobiles SA, 78140 Vélizy Villacoublay (FR)
(72) Inventeur: CONVERS, Germain, F-25200 Bethoncourt (FR)
(74) Mandataire: Rosenberg, Muriel Sylvie
(86) Numéro de dépôt international: PCT/FR2012/052311
(87) Numéro de publication internationale: WO 2013/057414

(56) Documents cités:
- EP-A1- 1 093 961
- EP-A2- 1 223 097
- DE-A1- 2 612 866
- FR-A1- 2 875 754

## Description

L'invention concerne les systèmes de freinage qui équipent certains véhicules, éventuellement de type automobile.

Comme le sait l'homme de l'art, le système de freinage d'un véhicule, par exemple de type automobile, comprend généralement une pédale de frein qui agit sur un maître-cylindre chargé de transmettre une pression hydraulique à des freins. La pédale de frein est généralement montée dans l'habitacle du véhicule sur une tôle appelée tablier qui sépare l'habitacle du compartiment avant où est généralement logé le moteur. Le maître-cylindre est généralement logé dans le compartiment avant à côté (ou sur) un amplificateur de freinage à dépression qui génère un effort complémentaire d'assistance.

Etant donné que la majorité des pays imposent une conduite du côté droit de la route, les constructeurs automobiles conçoivent généralement leurs véhicules pour une conduite à gauche. Par conséquent, les véhicules sont généralement conçus initialement avec un poste de conduite situé du côté gauche de leur habitacle. Afin de faciliter la liaison entre la pédale de frein et le maître-cylindre, ce dernier et l'amplificateur de freinage sont placés à gauche au voisinage de la pédale de frein. Cette liaison se fait alors au moyen d'une tige de commande.

Lorsque la législation d'un pays impose aux véhicules de rouler du côté gauche de la route, leur poste de conduite doit se trouver sur le côté droit de l'habitacle. Dans ce cas, plutôt que de modifier intégralement l'architecture de leurs véhicules, les constructeurs automobiles préfèrent redéfinir un poste de conduite à droite de l'habitacle tout en conservant l'amplificateur de freinage et le maître-cylindre du côté gauche. La pédale de frein située à droite est alors couplée à l'extrémité droite d'une barre de renvoi transversale dont l'extrémité gauche est solidarisée à un levier de commande qui est guidé par un palier, lié à un support fixé sur le tablier, et couplé au maître-cylindre par une tige de commande.

La barre de renvoi traversant la partie avant de l'habitacle, une portion de celle-ci peut se retrouver placée sans protection devant les pieds du passager avant. Il peut alors arriver que les pieds du passager avant exercent malencontreusement une pression sur cette portion de la barre de renvoi qui peut perturber sa rotation et donc gêner le freinage du véhicule.

Afin de remédier à cet inconvénient, il est possible de recouvrir au moins partiellement avec un capot de protection la barre de renvoi transversale et les moyens de commande de freinage (levier de commande, palier, support et portion de tige de commande). Hélas, la partie inférieure, de la sous-partie du capot de protection qui recouvre les moyens de commande de freinage, réduit notablement la hauteur de la zone d'arrêt de pied qui est située dans l'habitacle juste avant les moyens de commande de freinage, et donc cette zone d'arrêt de pied ne satisfait plus à certaines préconisations de sécurité.

Il est rappelé qu'il est préconisé, lorsque la zone dite de repose pieds présente une inclinaison comprise entre 35° et 45° par rapport au plancher, que cette zone de repose pieds soit prolongée vers le haut par une zone d'arrêt de pied (ou butée de pied) destinée à empêcher le glissement des pieds vers l'avant (ou fond) de la « cave à pieds » lors d'un choc frontal, et s'étendant sur une hauteur comprise entre environ 30 millimètres et environ 60 millimètres. Cette zone d'arrêt de pied est définie par une contremarche qui est prolongée vers l'avant du véhicule (et plus précisément vers le tablier) par une marche au dessus de laquelle sont situés les moyens de commande de freinage.

Pour remédier à l'inconvénient précité il serait possible de diminuer l'inclinaison du repose pieds qui est généralement défini dans le revêtement insonorisant qui est notamment placé entre le plancher du véhicule et le tapis de sol, mais cela nuirait au confort du passager avant. Il serait également possible de réduire l'épaisseur du revêtement insonorisant précité afin de descendre le niveau de la cave à pieds, mais cela poserait un problème de hauteur de siège et nuirait à l'insonorisation.

L'invention a donc pour but de proposer une solution alternative qui ne présente pas les inconvénients précités.

Elle propose notamment à cet effet un véhicule, éventuellement de type automobile, conforme à la revendication 1. D'autres caractéristiques sont énoncées dans les revendications dépendantes.

Grâce au renfoncement proposé par l'invention, la hauteur de la première partie de la butée de pied peut être augmentée afin d'atteindre une hauteur choisie, sans qu'il faille modifier l'inclinaison de la zone de repose pieds et sans qu'il faille diminuer sensiblement l'épaisseur du revêtement d'insonorisation.

D'autres caractéristiques et avantages de l'invention apparaîtront à l'examen de la description détaillée ci-après, et des dessins annexés, sur lesquels :
- la figure 1 illustre schématiquement, dans une vue en coupe dans un plan défini par des directions longitudinale et verticale, une partie d'un système de freinage de véhicule couplé à un exemple de réalisation de dispositif de protection selon l'invention, et
- la figure 2 illustre schématiquement, dans une vue en perspective du côté gauche, la partie de système de freinage et le dispositif de protection de la figure 1.

Les dessins annexés pourront non seulement servir à compléter l'invention, mais aussi contribuer à sa définition, le cas échéant.

L'invention a notamment pour but de proposer un dispositif de protection D pour une barre de renvoi BR transversale et des moyens de commande de freinage MCF d'un système de freinage d'un véhicule.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout type de véhicule dans lequel le poste de conduite est installé dans la partie avant droite de l'habitacle et les moyens de commande de freinage MCF sont installés dans la partie avant gauche de cet habitacle. Ainsi, l'invention concerne tous les véhicules terrestres, et notamment les voitures, les véhicules utilitaires, les cars (ou bus) et les camions.

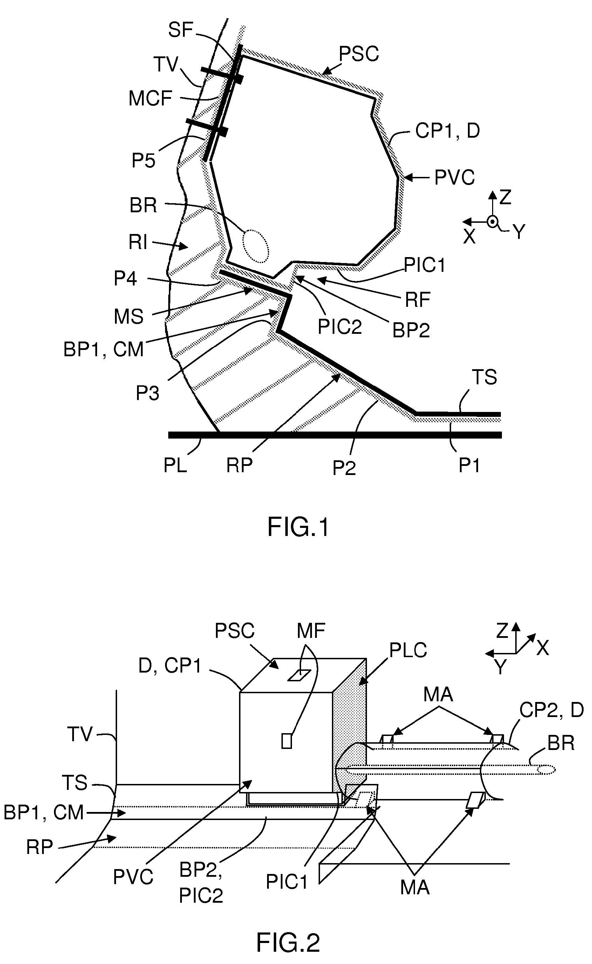

On a schématiquement représenté sur les figures 1 et 2 une petite partie de la zone avant gauche d'un habitacle de véhicule dont le poste de conduite est situé dans la zone avant droite. Plus précisément on a représenté partiellement la zone dite cave à pieds qui est située devant le siège dédié au passager avant gauche et dans laquelle ce dernier peut loger ses jambes. On notera que la planche de bord n'a pas été représentée afin de faciliter la compréhension des figures.

Sur les figures, la direction X est la direction longitudinale du véhicule, laquelle est sensiblement parallèle aux côtés latéraux qui comportent respectivement les portes latérales (ou portières), la direction Y est la direction transversale du véhicule, laquelle est sensiblement perpendiculaire aux côtés latéraux, et la direction Z est la direction verticale du véhicule, laquelle est sensiblement perpendiculaire au plancher PL du véhicule.

Comme cela est mieux illustré sur la figure 1, cette cave à pieds est délimitée par des parois P1 à P4 d'un revêtement insonorisant RI qui couvre le plancher PL du véhicule et une partie au moins du tablier TV de la caisse du véhicule. On notera que ces parois P1 à P4 sont généralement recouvertes par un tapis de sol TS.

La paroi P1 est sensiblement parallèle au plancher PL et située juste devant le siège du passager avant gauche.

La paroi P2 prolonge la paroi P1 vers l'avant du véhicule (et plus précisément en direction du tablier TV). Cette paroi P2 est inclinée de manière à définir une zone de repose pieds RP. Son inclinaison par rapport au plancher PL est de préférence comprise entre environ 35°et environ 45°.

La paroi P3 prolonge la paroi P2 vers le haut (c'est-à-dire de façon opposée au plancher PL). Cette paroi P3 constitue une contre-marche qui définit une première partie BP1 d'une butée de pied de la cave à pieds. Son inclinaison par rapport à la paroi P2 est de préférence comprise entre environ 70° et environ 110°.

La paroi P4 prolonge la paroi P3 vers l'avant du véhicule (et plus précisément en direction du tablier TV). Cette paroi P4 constitue une marche MS au dessus de laquelle sont installés des moyens de contrôle de freinage MCF d'un système de freinage du véhicule.

Ces moyens de commande de freinage MCF comprennent par exemple un levier de commande qui est guidé par un palier lié à un support SF solidarisé au tablier TV. On notera qu'une partie P5 du revêtement d'insonorisation RI est alors préférentiellement intercalée et comprimée entre le support SF et le tablier TV pour assurer une continuité de l'étanchéité acoustique. Ce levier de commande est couplé par une tige de commande à un maître-cylindre du système de freinage, qui est installé dans le compartiment avant du véhicule. Il est rappelé que le maître-cylindre est chargé, lorsqu'il est actionné par la tige de commande, de transmettre une pression hydraulique aux freins du véhicule. Ce maître-cylindre est généralement associé à un amplificateur de freinage à dépression chargé de générer un effort complémentaire d'assistance.

Le levier de commande est solidarisé à une extrémité gauche d'une barre de renvoi BR transversale (c'est-à-dire placée suivant la direction transversale Y) et dont l'extrémité droite est couplée à une pédale de frein du système de freinage, qui est installée dans la cave à pieds dédiée au conducteur dans la zone avant droite de l'habitacle (ou poste de conduite).

Cette barre de renvoi BR traverse donc la partie avant de l'habitacle, et une portion de celle-ci est placée sans protection dans la cave à pieds dédiée au passager avant.

L'invention propose de protéger au moins partiellement cette portion de la barre de renvoi BR et les moyens de commande de freinage MCF au moyen d'un dispositif de protection D.

Un dispositif de protection D, selon l'invention, comprend un capot CP1, CP2 qui est destiné à recouvrir au moins en partie les moyens de commande de freinage MCF et la barre de renvoi BR et à être solidarisé aux moyens de commande de freinage MCF. De plus, ce capot CP1, CP2 comprend une partie inférieure PIC1, PIC2 qui est munie d'un renfoncement RF (vers le tablier TV) comportant une partie de fond PIC2 qui est destinée à constituer une seconde partie BP2 de la butée de pied, qui prolonge vers le haut la première partie BP1 de cette dernière.

En fait, et comme cela apparaît mieux sur la figure 2, le renfoncement RF est défini dans une première sous-partie CP1 du capot, qui est destinée à recouvrir au moins partiellement les moyens de commande de freinage MCF. Cette première sous-partie CP1 est solidarisée à une seconde sous-partie CP2 du capot, qui est destinée à recouvrir au moins partiellement une portion de la barre de renvoi BR qui est située à droite des moyens de commande de freinage MCF.

On notera que le capot CP1, CP2 peut, par exemple, être réalisé par moulage d'un matériau plastique ou synthétique.

Dans l'exemple non limitatif illustré sur les figures 1 et 2, la partie de fond PIC2 du renfoncement RF présente une inclinaison qui est sensiblement identique à celle de la contremarche CM (définie par la paroi P3). Mais cela n'est pas obligatoire. En effet, cette partie de fond PIC2 pourrait être légèrement inclinée de quelques degrés (± 5°) par rapport à la contremarche CM.

Par ailleurs, dans l'exemple non limitatif illustré sur les figures 1 et 2, la partie de fond PIC2 s'étend sur une hauteur qui est sensiblement égale à la moitié de la hauteur de la butée de pied (l'autre moitié étant fournie par la paroi P3 qui définit la première partie BP1). Mais cela n'est pas obligatoire. En effet, d'autres répartitions de la hauteur totale de la butée de pied peuvent être envisagées entre les première BP1 et seconde BP2 parties. Ainsi, la partie de fond PIC2 pourrait s'étendre sur une hauteur qui est sensiblement égale à un tiers de la hauteur de la butée de pied (les deux autres tiers étant fournis par la paroi P3 qui définit la première partie BP1).

On comprendra que grâce à ce renfoncement RF il est possible, sans modifier l'inclinaison de la zone de repose pieds RP et sans diminuer sensiblement l'épaisseur du revêtement d'insonorisation RI, d'augmenter la hauteur de la première partie BP1 de la butée de pied afin qu'elle atteigne une hauteur choisie, par exemple en fonction de préconisations de sécurité ou de règles nationales ou internationales. Par exemple, et comme évoqué précédemment, on peut désormais avoir une hauteur de butée de pied qui est comprise entre environ 30 millimètres et environ 60 millimètres.

Le support SF auquel est lié le palier qui guide le levier de commande (des moyens de commande de freinage MCF) peut, par exemple, servir de point d'ancrage pour la première sous-partie CP1 du capot. Cet ancrage peut se faire au niveau d'une partie supérieure PSC de la première sous-partie CP1, qui prolonge en direction du tablier TV une partie avant PVC de cette première sous-partie CP1, laquelle prolonge vers le haut la partie inférieure PIC1, PIC2 de cette première sous-partie CP1. En variante ou en complément, les moyens de commande de freinage MCF peuvent, par exemple, servir de point d'ancrage pour la partie avant PVC de la première sous-partie CP1.

On notera qu'afin de faciliter la fixation du capot CP1, CP2 sur le support SF, ce dernier peut éventuellement être prolongé par un sous-capot de protection entourant étroitement les moyens de commande de freinage MCF et auquel on vient solidariser la première sous-partie CP1. Ce sous-capot peut, par exemple, être constitué de tôles qui sont mises en forme et assemblées les unes aux autres.

Par exemple, la partie supérieure PSC et/ou la partie avant PVC de la première sous-partie CP1 peu(ven)t comporter au moins un perçage destiné à permettre une fixation facile et rapide à l'aide de moyens de fixation MF, comme par exemple des clips ou des rivets.

La seconde sous-partie CP2 du capot peut, comme illustré non limitativement sur la figure 2, comporter des moyens d'appui MA destinés à venir s'appuyer sur la caisse du véhicule (par exemple sur une partie du revêtement d'insonorisation RI qui est placée contre le tablier TV à droite des moyens de commande de freinage MCF.

Par exemple, et comme illustré non limitativement sur la figure 2, ces moyens d'appui MA peuvent être répartis de manière à être placés en dessous et au dessus de la barre de renvoi BR. A titre d'exemple non limitatif, la seconde sous-partie CP2 peut comporter dans chacune de ses parties d'extrémité droite et gauche une paire d'appuis MA comprenant un appui inférieur aligné sur un appui supérieur. Chaque appui MA peut, par exemple, comporter une patte nervurée ayant une forte rigidité. On notera que ces appuis MA peuvent être éventuellement solidarisés fixement au revêtement d'insonorisation RI, ou au tablier TV via le revêtement d'insonorisation RI, à l'aide de moyens de fixation (non représentés).

On notera également que la répartition sur quatre appuis MA, ayant chacun une surface d'appui assez grande, de la pression exercée par les pieds du passager avant évite que le revêtement d'insonorisation RI soit notablement déformé.

De préférence, et comme illustré non limitativement sur la figure 2, le tapis de sol TS remonte légèrement le long des parties du revêtement d'insonorisation RI qui sont situées à droite et à gauche des moyens de commande de freinage MCF, de manière à prolonger vers le haut la contremarche CM et ainsi participer à la définition de la butée de pied.

L'invention ne se limite pas aux modes de réalisation de dispositif de protection et de véhicule décrits ci-avant, seulement à titre d'exemple, mais elle englobe toutes les variantes que pourra envisager l'homme de l'art dans le cadre des revendications ci-après.

## Revendications

1. Véhicule comprenant un système de freinage comportant une barre de renvoi transversale (BR), couplée d'un premier côté du véhicule à une pédale de frein propre à l'entraîner en rotation, et d'un second côté du véhicule à des moyens de commande de freinage (MCF) appartenant audit système de freinage et placés au dessus d'une marche (MS) d'un habitacle dudit véhicule qui prolonge vers l'avant une contremarche (CM) inclinée définissant une première partie (BP1) d'une butée de pied, **caractérisé en ce qu'**il comprend un dispositif de protection (D) pour ladite barre de renvoi transversale (BR) et lesdits moyens de commande de freinage (MCF), comprenant un capot (CP1, CP2), d'une part, destiné à recouvrir au moins en partie lesdits moyens de commande de freinage (MCF) et ladite barre de renvoi (BR) et à être solidarisé auxdits moyens de commande de freinage (MCF), et, d'autre part, comprenant une partie inférieure (PIC1, PIC2) munie d'un renfoncement (RF) comportant une partie de fond (PIC2) destinée à constituer une seconde partie (BP2) de la butée de pied prolongeant vers le haut ladite première partie (BP1).

2. Véhicule selon la revendication 1, **caractérisé en ce que** ladite partie de fond (PIC2) présente une inclinaison qui est sensiblement identique à celle de ladite contremarche (CM).

3. Véhicule selon l'une des revendications 1 et 2, **caractérisé en ce que** ladite partie de fond (PIC2) s'étend sur une hauteur qui est sensiblement égale à la moitié de la hauteur de la butée de pied.

4. Véhicule selon l'une des revendications 1 et 2, **caractérisé en ce que** ladite partie de fond (PIC2) s'étend sur une hauteur qui est sensiblement égale à un tiers de la hauteur de la butée de pied.

5. Véhicule selon l'une des revendications 3 et 4, **caractérisé en ce que** ladite hauteur de la butée de pied est comprise entre environ 30 millimètres et environ 60 millimètres.

6. Véhicule selon l'une des revendications 1 à 5, **caractérisé en ce que** ledit capot (CP1, CP2) comporte une partie supérieure (PSC) propre à être solidarisée à un support (SF) auquel sont solidarisés lesdits moyens de commande de freinage (MCF) et/ou une partie avant (PVC) propre à être solidarisée auxdits moyens de commande de freinage (MCF).

7. Véhicule selon l'une des revendications 1 à 6, **caractérisé en ce que** ledit capot (CP1, CP2) comporte, sur une sous-partie (CP2) destinée à recouvrir partiellement ladite barre de renvoi (BR), des moyens d'appui (MA) destinés à venir s'appuyer sur la caisse du véhicule.

8. Véhicule selon la revendication 7, **caractérisé en ce que** lesdits moyens d'appui (MA) sont répartis de manière à être placés en dessous et au dessus de ladite barre de renvoi (BR).

9. Véhicule selon l'une des revendications 7 et 8, **caractérisé en ce que** lesdits moyens d'appui (MA) sont destinés à s'appuyer sur un revêtement insonorisant (RI) qui couvre au moins partiellement un tablier (TV) de la caisse du véhicule.

## Patentansprüche

1. Fahrzeug, das ein Bremssystem umfasst, das eine Querumlenkstange (BR) umfasst, die auf einer ersten Seite des Fahrzeugs mit einem Bremspedal gekoppelt ist, das geeignet ist, sie in Drehung anzutreiben, und auf einer zweiten Seite des Fahrzeugs mit Bremssteuermitteln (MCF), die zu dem Bremssystem gehören und oberhalb einer Stufe (MS) einer Fahrgastzelle des Fahrzeugs platziert sind, die eine schräge Setzstufe (CM), die einen ersten Teil (BP1) eines Fußanschlags bildet, nach vorn verlängert, **dadurch gekennzeichnet, dass** es eine Schutzvorrichtung (D) für die Querumlenkstange (BR) umfasst, und dass die Bremssteuermittel (MCF) einerseits eine Haube (CP1, CP2) umfassen, die dazu bestimmt ist, die Bremssteuermittel (MCF) und die Querumlenkstange (BR) mindestens zum Teil abzudecken und mit den Bremssteuermitteln (MCF) fest verbunden zu sein, und, andererseits, einen unteren Teil (PIC1, PIC2), der mit einer Vertiefung (RF) versehen ist, die einen Bodenteil (PIC2) umfasst, der dazu bestimmt ist, einen zweiten Teil (BP2) des Fußanschlags zu bilden, der sich zur Oberseite des ersten Teils (BP1) verlängert.

2. Fahrzeug nach Anspruch 1, **dadurch gekennzeichnet, dass** der Bodenteil (PIC2) eine Neigung aufweist, die im Wesentlichen mit der der Setzstufe (CM) identisch ist.

3. Fahrzeug nach einem der Ansprüche 1 und 2, **dadurch gekennzeichnet, dass** sich der Bodenteil (PIC2) auf einer Höhe erstreckt, die im Wesentlichen gleich der Hälfte der Höhe des Fußanschlags ist.

4. Fahrzeug nach einem der Ansprüche 1 und 2, **dadurch gekennzeichnet, dass** sich der Bodenteil (PIC2) auf einer Höhe erstreckt, die im Wesentlichen gleich ist wie ein Drittel der Höhe des Fußanschlags.

5. Fahrzeug nach einem der Ansprüche 3 und 4, **dadurch gekennzeichnet, dass** die Höhe des Fußanschlags zwischen etwa 30 Millimeter und etwa 60 Millimeter liegt.

6. Fahrzeug nach einem der Ansprüche 1 bis 5, **dadurch gekennzeichnet, dass** die Haube (CP1, CP2) einen oberen Teil (PSC) umfasst, der geeignet ist, um mit einem Träger (SF) fest verbunden zu sein, an dem die Bremssteuermitteln (MCF) fest verbunden sind, und/oder einem Vorderteil (PVC), der geeignet ist, um fest mit den Bremssteuermitteln (MCF) verbunden zu sein.

7. Fahrzeug nach einem der Ansprüche 1 bis 6, **dadurch gekennzeichnet, dass** die Haube (CP1, CP2) auf einem Unterteil (CP2), der dazu bestimmt ist, die Querumlenkstange (BR) teilweise abzudecken, Auflagemittel (MA) umfasst, die dazu bestimmt sind, auf der Karosserie des Fahrzeugs zum Aufliegen zukommen.

8. Fahrzeug nach Anspruch 7, **dadurch gekennzeichnet, dass** die Auflagemittel (MA) derart verteilt sind, dass sie unterhalb und oberhalb der Querumlenkstange (BR) platziert sind.

9. Fahrzeug nach einem der Ansprüche 7 und 8, **dadurch gekennzeichnet, dass** die Auflagemittel (MA) dazu bestimmt sind, auf einer schalldämmenden Beschichtung (RI), die eine Stirnwand (TV) der Karosserie des Fahrzeugs mindestens teilweise abdeckt, aufzuliegen.

## Claims

1. A vehicle including a braking system comprising a transverse return bar (BR), coupled on a first side of the vehicle to a brake pedal suitable for driving it in rotation, and on a second side of the vehicle to braking control means (MCF) belonging to said braking system and positioned above a step (MS) of a passenger compartment of said vehicle which extends an inclined riser (CM) towards the front, defining a first portion (BP1) of a foot stop, **characterized in that** it includes a protection device (D) for said transverse return bar (BR) and said braking control means (MCF), including a cover (CP1, CP2), on the one hand, intended to cover at least in part said braking control means (MCF) and said return bar (BR) and to be secured to said braking control means (MCF), and, on the other hand, including a lower portion (PIC1, PIC2) provided with a reinforcement (RF) comprising a bottom part (PIC2) intended to form a second portion (BP2) of the foot stop upwardly extending said first portion (BP1).

2. The vehicle according to Claim 1, **characterized in that** said bottom part (PIC2) has an inclination which is substantially identical to that of said riser (CM).

3. The vehicle according to one of Claims 1 and 2, **characterized in that** said bottom part (PIC2) extends on a height which is substantially equal to half the height of the foot stop.

4. The vehicle according to one of Claims 1 and 2, **characterized in that** said bottom part (PIC2) extends on a height which is substantially equal to a third of the height of the foot stop.

5. The vehicle according to one of Claims 3 and 4, **characterized in that** said height of the foot stop is comprised between approximately 30 millimetres and approximately 60 millimetres.

6. The vehicle according to one of Claims 1 to 5, **characterized in that** said cover (CP1, CP2) comprises an upper part (PSC) suitable to be secured to a support (SF) to which said braking control means (MCF) are secured and/or a front part (PVC) suitable to be secured to said braking control means (MCF).

7. The vehicle according to one of Claims 1 to 6, **characterized in that** said cover (CP1, CP2) comprises, on a sub-part (CP2) intended to partially cover said return bar (BR), support means (MA) intended to come to rest on the body of the vehicle.

8. The vehicle according to Claim 7, **characterized in that** said support means (MA) are distributed so as to be positioned beneath and above said return bar (BR).

9. The vehicle according to one of Claims 7 and 8, **characterized in that** said support means (MA) are intended to rest on a sound-absorbent lining (RI) which covers at least partially a panel (TV) of the body of the vehicle.
